(19) Europäisches Patentamt
European Patent Office
Office européen des brevets

(11) **EP 2 321 624 B1**

(12) **FASCICULE DE BREVET EUROPEEN**

(45) Date de publication et mention de la délivrance du brevet:
**14.02.2018 Bulletin 2018/07**

(21) Numéro de dépôt: **09787124.8**

(22) Date de dépôt: **08.09.2009**

(51) Int Cl.:
***G01M 3/22*** *(2006.01)*

(86) Numéro de dépôt international:
**PCT/IB2009/053907**

(87) Numéro de publication internationale:
**WO 2010/029495 (18.03.2010 Gazette 2010/11)**

(54) **PROCEDE ET DISPOSITIF DE DETECTION DE FUITES DANS UNE CONDUITE DE LIQUIDE SOUTERRAINE, NOTAMMENT UNE CONDUITE D'EAU**

VERFAHREN UND EINRICHTUNG ZUM DETEKTIEREN VON LECKS IN EINEM UNTERIRDISCHEN FLÜSSIGKEITSROHR, INSBESONDERE EINEM WASSERROHR

METHOD AND DEVICE FOR DETECTING LEAKS IN AN UNDERGROUND LIQUID PIPE, PARTICULARLY A WATER PIPE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.09.2008 FR 0804940**

(43) Date de publication de la demande:
**18.05.2011 Bulletin 2011/20**

(73) Titulaire: **R + I Alliance**
**92040 Paris la Défense CEDEX (FR)**

(72) Inventeurs:
• **LUCENTE, Diego**
**F-92040 Paris La Défense (FR)**

• **CALSALS DEL BUSTO, Ignacio**
**E-03007 Alicante (ES)**
• **DELETOILLE, Jean-Pierre**
**F-78500 Sartrouville (FR)**

(74) Mandataire: **Cabinet Armengaud Aîné**
**16, rue Gaillon**
**75002 Paris (FR)**

(56) Documents cités:
**WO-A-01/92607      DE-A1- 4 127 543**
**DE-C1- 4 313 681    FR-A- 2 729 468**
**FR-A- 2 909 764      GB-A- 2 338 072**
**US-A- 4 189 938      US-A- 5 767 390**
**US-B1- 7 007 545**

EP 2 321 624 B1

**Description**

L'invention est relative à un procédé de détection de fuites dans une conduite de liquide souterraine, selon lequel :

- on injecte, par un diffuseur, un gaz dans le liquide de la conduite, gaz dont la teneur dans l'atmosphère est faible,
- et on parcourt en surface le trajet de la conduite avec un système de détection pour mesurer en des points successifs la teneur de l'air en gaz injecté, une teneur anormalement élevée constituant un indice de fuite.

L'invention concerne plus particulièrement la détection de fuites dans des conduites d'eau. Le gaz injecté est généralement de l'hélium.

DE 38 24 172 divulgue un tel procédé. L'injection du gaz dans l'eau de la conduite est effectuée à l'aide d'un branchement en dérivation faisant intervenir une chambre dans laquelle le liquide est pulvérisé et le gaz est injecté. Ce mode d'injection du gaz est relativement compliqué, et la diffusion du gaz dans le liquide n'est pas entièrement satisfaisante.

FR 2 729 468 concerne un procédé de détection du même type. L'injection du gaz dans le liquide fait intervenir un dispositif de mélange constitué d'une cuve reliée au réseau de distribution d'eau, la partie inférieure de la cuve étant pourvue d'un tube diffuseur qui est en communication avec des moyens d'alimentation en hélium. Comme dans le cas précédent, les moyens d'injection de gaz sont relativement compliqués à mettre en place, et la diffusion de gaz n'est pas entièrement satisfaisante. Le système de détection est relativement lourd et fait intervenir un spectromètre de masse.

GB 2 338 072 concerne un procédé de détection de fuites dans une conduite de liquide souterraine, en particulier une conduite d'eau, selon lequel on injecte un gaz dans le liquide de la conduite par un diffuseur. Un véhicule équipé de moyens de détection du gaz, à savoir de l'hélium, est déplacé à la surface du sol selon le trajet de la conduite. L'équipement de détection comprend un spectromètre de masse. Il est indiqué qu'il est préférable de préparer une solution saturée en hélium et de l'injecter dans la canalisation. A cet effet, l'injection a lieu dans une boucle en dérivation sur la canalisation. Aucune indication n'est fournie sur le diamètre moyen des pores de sortie du diffuseur pour le gaz. Les diffuseurs ne font pas apparaître de moyens de liaison permettant leur déplacement et leur introduction de manière étanche en un point de la conduite.

L'invention a pour but, surtout, de fournir un procédé de détection de fuites dans une conduite de liquide souterraine, du genre défini précédemment, qui soit d'une mise en oeuvre simple et rapide, et qui permette d'améliorer la diffusion du gaz dans le liquide, et ainsi d'améliorer la détection de fuites. En effet, si la diffusion du gaz n'est pas assurée dans de bonnes conditions, des poches de gaz peuvent se former dans la conduite, et du gaz peut s'échapper au niveau d'un raccord entre deux conduites, bien que ce raccord soit étanche à l'eau. Il peut ainsi en résulter de fausses indications.

Selon un premier aspect de l'invention, un procédé de détection de fuites du genre défini précédemment est caractérisé en ce que l'on choisit un diffuseur ayant des pores de sortie pour le gaz dont le diamètre moyen est inférieur à 50 $\mu$m pour donner des bulles de gaz dont le diamètre est réduit. De préférence, le diamètre moyen des pores de sortie du diffuseur est inférieur ou égal à 20 $\mu$m.

Selon un autre aspect de l'invention, qui est utilisé en combinaison avec le précédent, on relie le diffuseur à une arrivée de gaz sous pression par des moyens de liaison permettant un déplacement du diffuseur, et on introduit de manière étanche le diffuseur en un point de la conduite pour injecter le gaz directement dans la conduite. On installe le diffuseur dans une enveloppe rigide cylindrique dont une extrémité est ouverte et comporte des moyens de liaison étanche à un orifice de vanne à passage intégral, tandis que l'autre extrémité de l'enveloppe est traversée de manière coulissante étanche par un tuyau d'alimentation en gaz du diffuseur,

- on relie l'enveloppe de manière étanche à l'orifice de vanne, cette dernière étant fermée,
- on ouvre la vanne, et on introduit le diffuseur dans la conduite en le faisant passer à travers la vanne ouverte.

On peut orienter le diffuseur dans la conduite suivant une direction diamétrale, ou suivant une direction parallèle à l'axe de la conduite.

Le diffuseur peut être rigide réalisé en métal fritté, notamment en acier fritté, ou en céramique ou en graphite, ou autre matériau équivalent en termes de porosité.

En variante, le diffuseur peut être flexible, et notamment réalisé en caoutchouc silicone ou en polyéthylène.

Pour la détection on utilise avantageusement un système de détection comprenant une coupelle d'aspiration prévue pour être posée à la surface du sol, cette coupelle étant reliée à une pompe portable d'aspiration, laquelle dirige le mélange aspiré vers un détecteur portable du gaz injecté.

L'invention est également relative à un dispositif de détection de fuites d'une conduite de liquide souterraine, pour la mise en oeuvre du procédé défini précédemment, ce dispositif comportant un diffuseur de gaz dans le liquide et étant caractérisé en ce que ce diffuseur présente des pores de sortie du gaz ayant un diamètre moyen inférieur à 50 $\mu$m, de préférence inférieur ou égal à 20 $\mu$m.

Selon un autre aspect de l'invention, qui est utilisé en combinaison avec le précédent, le diffuseur est relié à une arrivée de gaz sous pression par des moyens de liaison permettant le déplacement du diffuseur, lequel est monté dans une enveloppe rigide cylindrique dont une extrémité est ouverte et comporte des moyens de liaison étanche à un orifice de vanne à passage intégral, tandis que l'autre extrémité de l'enveloppe est traversée de manière coulissante étanche par un tuyau d'alimentation en gaz du diffuseur,

Les moyens de liaison du diffuseur avec l'arrivée de gaz sont avantageusement constitués par un tuyau flexible.

De préférence, le dispositif de détection comporte un système de détection de gaz qui comprend une pompe portable dont l'orifice d'admission est relié à une coupelle d'aspiration prévue pour être posée sur le sol. Le refoulement de la pompe est relié à un détecteur portable de gaz. Un dispositif numérique portable est prévu pour enregistrer les résultats fournis par le détecteur. Une unité GPS est avantageusement prévue pour permettre de localiser les endroits inspectés, et fournir ces informations au dispositif numérique.

Le dispositif de détection selon l'invention se compose d'éléments portatifs qui facilitent les opérations.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est un schéma du dispositif d'injection de gaz pour la mise en oeuvre du procédé selon l'invention.
Fig. 2 est un schéma du système de détection de gaz.
Fig. 3 est une vue schématique avec parties arrachées de la mise en place du diffuseur dans une conduite et
Fig. 4 est une vue schématique en coupe d'une vanne à boule, à passage intégral.

Le procédé et le dispositif de détection de fuites de conduites de liquide, notamment de conduites d'eau, selon l'invention, sont basés sur l'utilisation d'un gaz traceur, de préférence l'hélium. Le procédé peut être utilisé dans des conduites en service, sans qu'il soit besoin d'interrompre la distribution d'eau dans la conduite. Le dispositif pour la mise en oeuvre du procédé comporte

- un dispositif d'injection de gaz prévu pour assurer une dissolution optimale du gaz dans le liquide,
- et un système de détection de gaz, relativement léger et portatif, pour permettre d'identifier et de localiser des concentrations en hélium ou plus généralement en gaz traceur, plus élevées que celles de l'atmosphère dans les conditions normales. Le système de détection de gaz comporte en outre des moyens d'enregistrement des résultats.

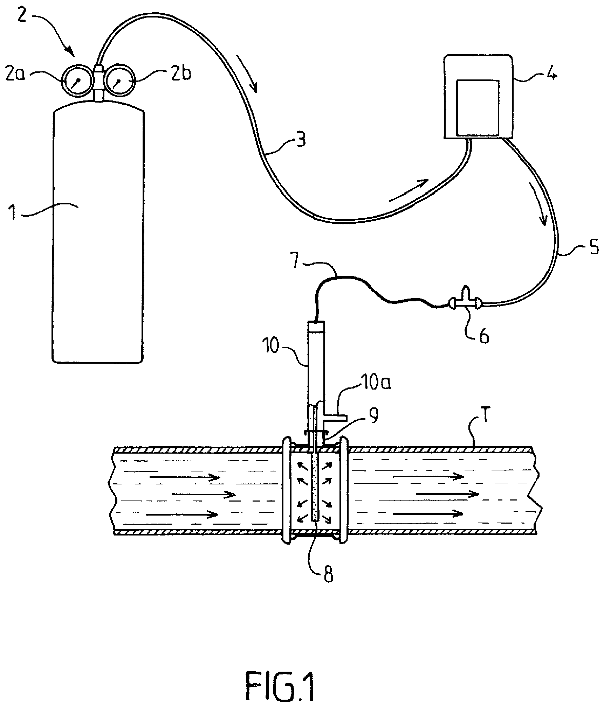

Comme visible sur Fig. 1, le dispositif d'injection du gaz dans le liquide de la conduite comprend un réservoir 1 d'hélium, habituellement sous forme de bouteille pressurisée, équipé d'un détendeur 2 avec manomètre 2a donnant la pression en amont du détendeur 2, c'est-à-dire la pression du réservoir 1, et manomètre 2b en aval, c'est-à-dire à la sortie du détendeur 2. Un tuyau flexible 3 relie la sortie du détendeur 2 à un régulateur 4, prévu pour commander le débit de gaz. Le régulateur 4 peut être un régulateur de débit volumétrique ou de débit massique.

La sortie du régulateur 4 est reliée, par un tuyau flexible 5 à un organe de connexion 6, muni d'un système anti-retour. L'organe de connexion 6 est raccordé à un autre tuyau flexible 7 dont l'extrémité éloignée de l'organe 6 est reliée, soit directement, soit par un tuyau intermédiaire, à un diffuseur 8.

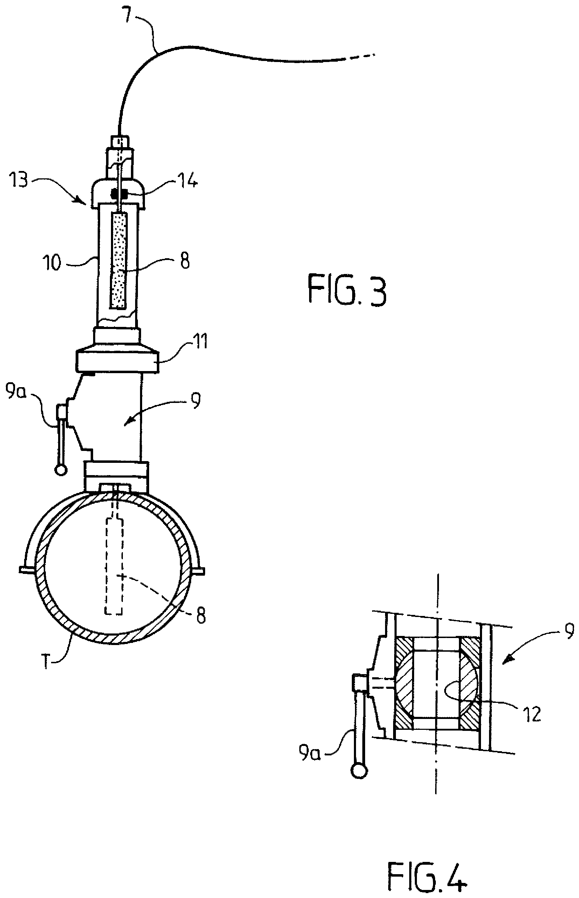

Le diffuseur 8 présente des pores de sortie du gaz ayant un diamètre moyen inférieur à 50 $\mu$m pour donner des bulles de gaz de diamètre réduit, en particulier inférieur à 300 $\mu$m. De bons résultats ont été obtenus avec un diffuseur présentant des pores ayant un diamètre moyen d'environ 13 $\mu$m. Généralement, le diffuseur 8 a une forme cylindrique dont le diamètre est suffisamment réduit pour pouvoir traverser une vanne 9 (voir Fig. 3 et 4) à passage intégral de diamètre au moins égal à 30 mm.

Le diffuseur 8 peut être rigide, et constitué d'un métal fritté, notamment d'acier fritté, ou de matériau céramique, ou de graphite, ou matériau équivalent, présentant la porosité souhaitée.

Il est également possible d'envisager des diffuseurs flexibles, notamment fabriqués en caoutchouc silicone, polyéthylène ou matière équivalente. De tels diffuseurs flexibles seront utilisés de préférence lorsque les points d'accès à la conduite T rendent difficile, ou impossible, l'introduction d'un diffuseur rigide.

Comme visible sur Fig. 3, le diffuseur 8 est installé dans une enveloppe rigide cylindrique 10 dont une extrémité ouverte 11 est munie de moyens de raccord, de type filetage ou prise, à un orifice d'une vanne 9. Cette vanne est du type à passage intégral et comporte (Fig.4) un obturateur constitué par une portion de sphère traversée suivant un diamètre par un passage 12 qui peut être aligné, dans la position d'ouverture, avec les orifices d'entrée et de sortie de la vanne. Une rotation d'un quart de tour de l'organe obturateur commandée par une poignée extérieure 9a permet de fermer la vanne. Le diamètre du diffuseur 8 est inférieur au diamètre du passage 12 de sorte que le diffuseur 8 peut traverser le passage 12 lorsque la vanne 9 est en position ouverte.

Le tuyau 7 de raccordement du diffuseur 8 traverse l'autre extrémité 13 de l'enveloppe 10 de manière coulissante étanche, grâce à un joint torique 14, en particulier gonflable. Il est ainsi possible de pousser ou de tirer le tuyau 7 à travers l'extrémité 13, de manière étanche, et de déplacer en conséquence le diffuseur 8.

Dans la position de transport ou de repos, le diffuseur 8 est entièrement logé à l'intérieur de l'enveloppe 10 dont la longueur est supérieure à celle du diffuseur 8.

L'introduction du diffuseur 8 dans la conduite T peut s'effectuer en tout point accessible, ou rendu accessible, comportant un orifice d'entrée dans la conduite tel qu'un orifice de décharge, de purge, ou pour une liaison de service. Il faut toutefois que le diamètre de cet orifice soit suffisant pour laisser passer le diffuseur 8. Si cet orifice est équipé d'une vanne du type de la vanne 9 (Fig. 3), l'enveloppe 10 peut être reliée directement à la vanne 9. Sinon, une vanne 9 est installée sur l'orifice d'accès. Dans le cas où aucun accès ne serait présent sur la conduite T, un orifice serait pratiqué, avec installation d'une vanne 9, pour l'introduction du diffuseur 8.

Dans le cas d'un diffuseur 8 rigide, il est souhaitable de le maintenir dans la conduite suivant une position diamétrale, transversalement à l'écoulement de fluide.

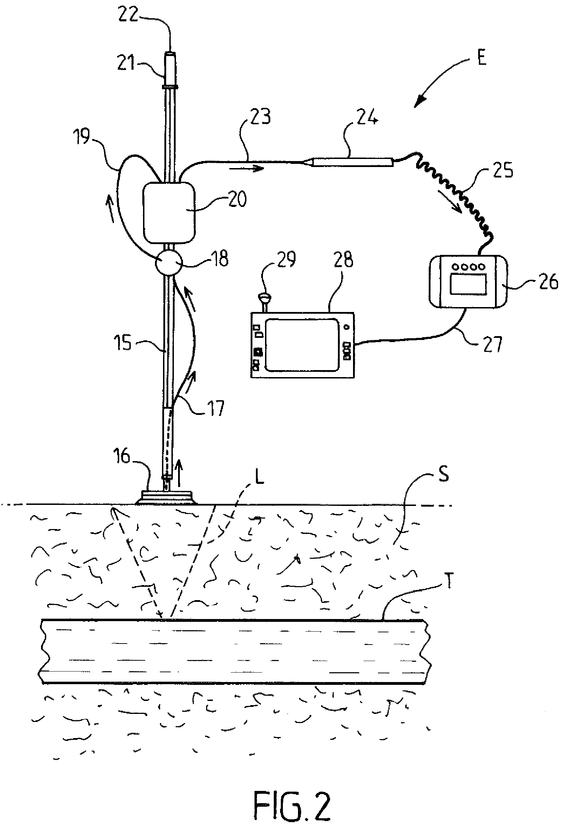

Le dispositif de détection de fuites comporte, outre le dispositif d'injection illustré sur Fig. 1 et 3, un système E de détection du gaz traceur, à savoir l'hélium dans l'exemple considéré, illustré sur Fig. 2.

Ce système de détection E est prévu pour être capable de recueillir et d'analyser les traces d'hélium présentes dans le sol à l'endroit où a lieu une fuite dans la conduite T. Le système de détection E est également prévu pour enregistrer les données d'inspection et localiser l'endroit où a eu lieu cette inspection. A cet effet, le système de détection E comprend les composants décrits ci-après.

Une canne de reniflement 15 portative comporte, à son extrémité inférieure, une coupelle d'aspiration 16 en forme d'assiette renversée munie sur son bord périphérique d'une jupe d'étanchéité qui peut être appliquée contre le sol S. La partie supérieure de la coupelle 16 est fermée par un disque comportant, en son centre, un orifice d'aspiration auquel est raccordée de manière étanche l'extrémité inférieure d'un tuyau flexible 17.

La coupelle 16 est installée de manière démontable à l'extrémité de la canne 15 de telle sorte que l'opérateur peut choisir, parmi plusieurs coupelles disponibles, celle qui est la mieux adaptée à la configuration du sol à inspecter.

Le tuyau flexible 17 est relié à un ou plusieurs filtres 18 à poussière et à humidité, portés par la canne 15. La sortie du filtre 18 est reliée par un tuyau flexible 19 à l'orifice d'aspiration d'une pompe portable 20 montée en partie haute de la canne 15. Une batterie, ou des piles électriques, 21 d'alimentation de la pompe 20 sont prévues en partie haute de la canne 15 avec un interrupteur 22.

Un tuyau flexible 23 est branché sur l'orifice de refoulement de la pompe 20. Le tuyau 23 est relié par un élément de raccord 24 à un tuyau extensible 25 enroulé en hélice. Le tuyau 25 est relié à un détecteur d'hélium portable 26, disponible dans le commerce *(exemples : modèle PHD-4 commercialisé par Varian, modèle PICO commercialisé par MKS...)*, de sensibilité égale à, ou meilleure que, 5 ppm (parties par million) d'hélium dans l'air.

Les informations fournies par le détecteur 26 sont transmises, par un câble 27 à un dispositif numérique portable 28 pour l'enregistrement des données. Le dispositif 28 peut être un PDA (assistant numérique personnel), ou un ordinateur PC portable, ou un PC à tablette, ou un UMPC (PC ultra-mobile) ou tout autre collecteur de données numériques. Le dispositif numérique 28 permet un enregistrement continu des résultats (niveaux de concentration d'hélium), ainsi que leur représentation graphique.

En outre, une unité GPS (système de positionnement global) 29 est prévue pour permettre de localiser les endroits inspectés. Ce composant 29 peut être un élément extérieur ou une partie intégrée dans le dispositif numérique portable 28. Les signaux de sortie du GPS 29 sont enregistrés par le dispositif numérique 28 simultanément aux signaux de sortie du détecteur 26, de telle sorte que l'heure et le lieu de la mesure sont ajoutés aux résultats de l'inspection.

Le détecteur 26 et le dispositif numérique 28 peuvent être portés en bandoulière, à l'aide d'une sangle non représentée, par un opérateur qui se déplace sur le terrain tout en portant la canne 15.

Une détection de fuite s'effectue de la manière suivante.

Pour introduire le diffuseur 8 dans la canalisation T, on choisit un point d'insertion (soupape, décharge, connexion de service) dont le diamètre de passage est supérieur au diamètre du diffuseur 8, soit généralement supérieur à 30 mm. Ce point d'insertion est équipé d'une vanne 9, du type à boule ou à obturateur, qui laisse un passage intégral, en position ouverte.

Alors que la vanne 9 est en position fermée, on raccorde l'enveloppe 10 (Fig.3), contenant le diffuseur 8, de manière étanche à l'orifice de la vanne 9 éloigné de la conduite T.

La vanne 9 est ensuite ouverte de sorte que l'eau de la conduite P remplit l'enveloppe 10 dont l'air est évacué grâce à un purgeur 10a (Fig.1).

On introduit ensuite le diffuseur 8 dans la conduite T en poussant le tuyau flexible 7 de manière étanche à travers le joint torique 14. Dans le cas d'un joint 14 gonflable, la pression dans le joint peut être réduite pour faciliter le coulissement, jusqu'à ce que le diffuseur 8 soit en place dans la conduite T. La pression est ensuite de nouveau augmentée dans le joint torique 14.

Lorsque l'installation du diffuseur 8 dans la conduite T est terminée, on assure l'admission d'un courant d'hélium en agissant sur la commande 4. L'écoulement optimum de gaz est relié à l'écoulement d'eau à l'intérieur de la conduite T par la loi de Henry :

$$C_{aq} = H \times P_{gaz}$$

formule dans laquelle :

- $P_{gaz}$ est la pression partielle d'hélium (exprimée en atmosphères) ;
- H est une constante dépendant de la température, différente pour chaque gaz. Sa valeur pour l'hélium à 25° est $3.7.10^{-4}$ mol m$^{-3}$ atm$^{-1}$ ;
- $C_{aq}$ est la concentration à l'équilibre du gaz (mol/m$^3$).

L'injection de gaz est maintenue pendant le temps considéré comme nécessaire pour marquer l'eau qui s'écoule dans la conduite T.

Du fait que le diffuseur 8 est disposé directement dans la conduite et qu'il comporte des orifices de sortie de diamètre réduit, les bulles de gaz sont elles-mêmes de diamètre réduit et se dissolvent rapidement dans le liquide. La détection en surface pourra commencer à une faible distance, de quelques mètres, en aval du point d'injection. Selon les techniques antérieures, la diffusion et la dissolution de l'hélium dans l'eau étaient plus longues à obtenir de sorte que les mesures ne pouvaient commencer qu'à plusieurs centaines de mètres du point d'injection.

Si une fuite est présente en un point quelconque en aval de l'injection dans le réseau de distribution d'eau, l'eau marquée par l'hélium dissous va s'écouler dans le sol à travers la fuite. Une phase de désorption de l'hélium (phénomène inverse de la dissolution) va se produire et libérer lentement l'hélium dans le sol. L'hélium est nettement moins volatil que l'hydrogène et reste plus longtemps dans le sol avant d'être évacué à l'atmosphère. En pratique, on peut travailler jusqu'à 5 jours après l'injection d'hélium dans l'eau pour effectuer les opérations de détection de fuites.

Lorsque l'injection est terminée, l'inspection pour déterminer la ou les fuites est effectuée par un opérateur qui se déplace en marchant sur le sol S, avec le système de détection E de Fig. 2, au-dessus du trajet de la conduite T.

Des échantillons d'air emprisonné dans le sol sont prélevés en plaçant la coupelle de détection 16 en des points successifs et en mettant en action la pompe 20 et le détecteur 26. La distance entre les points successifs d'application de la coupelle 16 peut être de l'ordre de 5 mètres. Toutefois, cette distance dépend de la profondeur d'enfouissement de la conduite T, des caractéristiques du sol S, de l'importance supposée de la fuite et du temps qui s'est écoulé depuis l'injection. Tous ces paramètres influent sur l'angle du cône L de diffusion (Fig.2).

L'application de la coupelle 16 sur le sol doit être effectuée de manière aussi étanche que possible. L'interrupteur de la pompe 20 est actionné pendant quelques secondes, par exemple 10 secondes, et l'air aspiré est envoyé dans le détecteur 26. Les niveaux de concentration de l'hélium peuvent être lus directement sur le détecteur ou sur un enregistreur numérique de données. Toute concentration d'hélium supérieure à la concentration normale de l'atmosphère (5 ppm) peut être considérée comme un indice de fuite.

Les résultats de l'inspection de fuite sont enregistrés et localisés par le dispositif portable 28. Ils pourront être réexaminés plus tard, et être présentés dans un système d'informations géographiques (GIS).

Le dispositif de détection de l'invention peut également être utilisé pour des canalisations fermées non pressurisées dans lesquelles l'eau circule.

La concentration de l'hélium dissous dans l'eau de la conduite T peut être estimée, et on peut ainsi envisager d'établir une relation entre la valeur de la concentration en hélium fournie par le détecteur 26 et l'importance de la fuite d'eau.

L'invention permet, avec un dispositif portable, de détecter des fuites dans des canalisations en service, sans interruption de la fourniture d'eau aux usagers. L'utilisation d'un diffuseur interne 8 à pores de diamètre inférieur à 50 $\mu$m, de préférence égal ou inférieur à 20 $\mu$m, et sa disposition directement dans la conduite, améliorent la dissolution du gaz. Ce facteur est critique pour plusieurs raisons :

- une accumulation de gaz non dissous peut affecter le fonctionnement normal du réseau ;
- la présence d'hélium non dissous peut conduire à des fausses détections de fuite car le gaz peut s'échapper par des défauts de joints ou analogues trop petits pour qu'une fuite d'eau se produise ;
- du gaz non dissous peut s'échapper en grandes quantités par les évents, et se trouver perdu pour la détection de fuites ;
- du gaz non dissous aura tendance à suivre une course ascendante le long du réseau, et à ne pas suivre l'écoulement de l'eau ;
- du gaz non dissous s'accumule aux points hauts, et est perdu pour la détection de fuites ;
- une meilleure dissolution réduit la quantité de gaz exigée pour la détection de fuites.

Du fait que le dispositif de détection est portable, il peut être utilisé dans la plupart des situations. La connexion du détecteur à un dispositif numérique de données permet un enregistrement continu des résultats d'inspection pour un examen ultérieur. L'heure et la position du prélèvement ajoutées aux données de niveaux de concentration de l'hélium permettent leur représentation géographique et fournissent une information supplémentaire particulièrement intéressante.

**Revendications**

1. Procédé de détection de fuites dans une conduite de liquide souterraine, en particulier une conduite d'eau, selon lequel :

   - on injecte, par un diffuseur (8), un gaz dans le liquide de la conduite, gaz dont la teneur dans l'atmosphère est faible,
- et on parcourt en surface le trajet de la conduite avec un système de détection (E) pour mesurer en des points successifs la teneur de l'air en gaz injecté, une teneur anormalement élevée constituant un indice de fuite,

**caractérisé en ce que** l'on choisit un diffuseur (8) ayant des pores de sortie pour le gaz dont le diamètre moyen est inférieur à 50 $\mu$m pour donner des bulles de gaz dont le diamètre est réduit
et **en ce qu'**on :

- installe le diffuseur (8) dans une enveloppe rigide cylindrique (10) dont une extrémité (11) est ouverte et comporte des moyens de liaison étanche à un orifice de vanne (9) à passage intégral, tandis que l'autre extrémité (13) de l'enveloppe est traversée de manière coulissante étanche par un tuyau d'alimentation (7) en gaz du diffuseur,
- relie l'enveloppe (10) de manière étanche à l'orifice de vanne (9), cette dernière étant fermée,
- ouvre la vanne (9), et on introduit le diffuseur (8) dans la conduite (T) en le faisant passer à travers la vanne ouverte (9).

2. Procédé selon la revendication 1, **caractérisé en ce que** le diamètre moyen des pores de sortie du diffuseur est inférieur ou égal à 20 $\mu$m.

3. Procédé selon l'une des revendications précédentes, **caractérisé en ce que** le diffuseur (8) est rigide réalisé en métal fritté, en particulier en acier fritté.

4. Procédé selon l'une des revendications 1 à 2, **caractérisé en ce que** le diffuseur (8) est flexible, en particulier réalisé en caoutchouc silicone ou en polyéthylène.

5. Procédé selon l'une des revendications précédentes, **caractérisé en ce que**, pour la détection, on utilise un système de détection (E) comprenant une coupelle d'aspiration (16) prévue pour être posée à la surface du sol, cette coupelle étant reliée à une pompe portable (20) d'aspiration, laquelle dirige le mélange aspiré vers un détecteur portable (26) du gaz injecté.

6. Dispositif de détection de fuites d'une conduite de liquide souterraine, en particulier une conduite d'eau, comportant un diffuseur de gaz dans le liquide, **caractérisé en ce que** le diffuseur (8) est relié à une arrivée de gaz sous pression par des moyens de liaison (7) permettant le déplacement du diffuseur, lequel est monté dans une enveloppe rigide cylindrique (10) dont une extrémité (11) est ouverte et comporte des moyens de liaison étanche à un orifice de vanne (9) à passage intégral, tandis que l'autre extrémité (13) de l'enveloppe est traversée de manière coulissante étanche par un tuyau (7) d'alimentation en gaz du diffuseur, et comportant des moyens d'ouverture (9a) de ladite vanne et **en ce que** ledit diffuseur (8) a des pores de sorties pour le gaz dont le diamètre moyen est inférieur à 50 $\mu$m pour donner des bulles de gaz dont le diamètre est réduit.

7. Dispositif selon la revendication 6, **caractérisé en ce que** les moyens de liaison du diffuseur (8) avec l'arrivée de gaz sont constitués par un tuyau flexible (7).

8. Dispositif selon l'une des revendications 6 à 7, **caractérisé en ce qu'**il comporte un système (E) de détection de gaz comprenant une pompe portable (20) dont l'orifice d'admission est relié à une coupelle d'aspiration (16) prévue pour être posée sur le sol, le refoulement de la pompe (20) étant relié à un détecteur portable de gaz (26).

9. Dispositif selon la revendication 8, **caractérisé en ce que** le système (E) de détection de gaz comprend un dispositif numérique portable (28) prévu pour enregistrer les résultats fournis par le détecteur (26).

10. Dispositif selon la revendication 9. **caractérisé en ce qu'**une unité GPS (29) est prévue pour permettre de localiser les endroits inspectés, et fournir ces informations au dispositif numérique (28).

**Patentansprüche**

1. Verfahren zum Detektieren von Leckagen in einer unterirdischen Flüssigkeitsleitung, insbesondere einer Wasserleitung, bei dem:

- durch ein Zerstäuberelement (8) ein Gas in die Flüssigkeit der Leitung eingesprüht wird, dessen Gehalt in der Atmosphäre gering ist,
- und die Strecke der Leitung mit einem Detektionssystem (E) oberflächlich abgefahren wird, um an aufeinander folgenden Punkten den Gehalt der Luft an eingesprühtem Gas zu messen, wobei ein ungewöhnlich hoher Gehalt ein Anzeichen für eine Leckage darstellt,

**dadurch gekennzeichnet, dass** ein Zerstäuberelement (8) mit Austrittsporen für das Gas ausgewählt wird, deren mittlerer Durchmesser kleiner als 50 $\mu$m ist, um Gasblasen mit reduziertem Durchmesser zu bewirken,
und dass

- das Zerstäuberelement (8) in einer zylindrischen starren Umhüllung (10) installiert wird, von der ein Ende (11) offen ist und die Mittel zum abdichtenden Verbinden mit einer Öffnung eines Ventils (9) mit vollem Durchgang aufweist, während das andere Ende (13) der Umhüllung gleitend und abdichtend von einem Rohr für die Versorgung (7) des Zerstäuberelements mit Gas durchlaufen wird,
- die Umhüllung (10) abdichtend mit der Öffnung des Ventils (9) verbunden wird, wobei diese Letzte geschlossen ist,
- das Ventil (9) geöffnet wird und das Zerstäuberelement (8) in die Leitung (T) eingeführt wird, indem sie durch das geöffnete Ventil (9) hindurch läuft.

2. Verfahren nach Anspruch 1, **dadurch gekennzeichnet, dass** der mittlere Durchmesser der Austrittsporen des Zerstäuberelements kleiner oder gleich 20 μm ist.

3. Verfahren nach einem der vorhergehenden Ansprüche, **dadurch gekennzeichnet, dass** das Zerstäuberelement (8) starr aus gesintertem Metall realisiert ist, insbesondere aus gesintertem Stahl.

4. Verfahren nach einem der Ansprüche 1 bis 2, **dadurch gekennzeichnet, dass** das Zerstäuberelement (8) flexibel ist, insbesondere aus Silikongummi oder aus Polyethylen realisiert ist.

5. Verfahren nach einem der vorhergehenden Ansprüche, **dadurch gekennzeichnet, dass** für die Detektion ein Detektionssystem (E) verwendet wird, das einen Saugnapf (16) umfasst, der dafür vorgesehen ist, auf die Oberfläche des Bodens gestellt zu werden, wobei dieser Napf mit einer tragbaren Ansaugpumpe (20) verbunden ist, die das angesaugte Gemisch zu einem tragbaren Detektor (26) des eingesprühten Gases hin leitet.

6. Vorrichtung zum Detektieren von Leckagen in einer unterirdischen Flüssigkeitsrohrleitung, insbesondere einer Wasserleitung, die ein Element zum Zerstäuben von Gas in die Flüssigkeit aufweist, **dadurch gekennzeichnet, dass** das Zerstäuberelement (8) mit einer Zuleitung von Druckgas durch die Verbindungsmittel (7) zum Bewegen des Zerstäuberelements verbunden ist, das in einer zylindrischen starren Umhüllung (10) installiert ist, von der ein Ende (11) offen ist und die Mittel zum abdichtenden Verbinden mit einer Öffnung eines Ventils (9) mit vollem Durchgang aufweist, während das andere Ende (13) der Umhüllung gleitend und abdichtend von einem Rohr für die Versorgung (7) des Zerstäubers mit Gas durchlaufen wird, und die Mittel zum Öffnen (9a) des Ventils aufweist, und dass das Zerstäuberelement (8) Austrittsporen für das Gas hat, deren mittlerer Durchmesser kleiner als 50 μm ist, um Gasblasen mit reduziertem Durchmesser zu bewirken.

7. Vorrichtung nach Anspruch 6, **dadurch gekennzeichnet, dass** die Mittel zum Verbinden des Zerstäuberelements (8) mit einer Zuleitung von Gas von einem flexiblem Rohr (7) gebildet sind.

8. Vorrichtung nach einem der Ansprüche 6 bis 7, **dadurch gekennzeichnet, dass** sie ein System (E) zum Detektieren von Gas aufweist, das eine tragbare Pumpe (20) umfasst, dessen Einlassöffnung mit einem Saugnapf (16) verbunden ist, der dafür vorgesehen ist, auf den Boden gestellt zu werden, wobei die Auslassöffnung der Pumpe (20) mit einem tragbaren Gasdetektor (26) verbunden ist.

9. Vorrichtung nach Anspruch 8, **dadurch gekennzeichnet, dass** das System (E) zum Detektieren von Gas eine tragbare digitale Vorrichtung (28) zum Aufzeichnen der von dem Detektor (26) bereitgestellten Ergebnisse umfasst.

10. Vorrichtung nach Anspruch 9, **dadurch gekennzeichnet, dass** eine GPS-Einheit (29) zum Lokalisieren der inspizierten Stellen und zum Bereitstellen dieser Informationen an die digitale Vorrichtung (28) vorgesehen ist.

**Claims**

1. A method of detecting leaks in an underground liquid duct, in particular a water duct, according to which:

   - a diffuser (8) is used to inject a gas into the liquid of the duct, the gas having a low atmospheric content,
   - and the path of the duct is traced on the surface with a detection system (E) for measuring at successive points the air content in the injected gas, an abnormally high content constituting a leak indicator,

   **characterized in that** a diffuser (8) is selected that has outlet pores for the gas with the mean diameter being less than 50 μm to produce gas bubbles with a reduced diameter
   and **characterized in that**:

   - the diffuser (8) is installed in a rigid cylindrical jacket (10), one end (11) of which is open and includes means of linking in a leaktight manner to a full-bore valve orifice (9), while the other end (13) of the jacket is passed through in a leaktight sliding manner by a pipe (7) for feeding gas to the diffuser,
- the jacket (10) is linked in a leaktight manner to the valve orifice (9), the latter being closed,
- the valve (9) is opened and the diffuser (8) is inserted into the duct (T) by passing it through the open valve (9).

2. The method as claimed in claim 1, **characterized in that** the mean diameter of the outlet pores of the diffuser is less than or equal to 20 $\mu$m.

3. The method as claimed in one of the preceding claims, **characterized in that** the diffuser (8) is rigid and made of sintered metal, in particular sintered steel.

4. The method as claimed in one of claims 1 to 2, **characterized in that** the diffuser (8) is flexible, in particular made of silicone rubber or of polyethylene.

5. The method as claimed in one of the preceding claims, **characterized in that**, for the detection, a detection system (E) is used that comprises a suction cup (16) designed to be placed on the surface of the ground, this cup being linked to a portable suction pump (20), which directs the sucked mixture toward a portable detector (26) for detecting the injected gas.

6. A device for detecting leaks in an underground liquid duct, in particular a water duct, comprising a diffuser of gas into the liquid, **characterized in that** the diffuser (8) is linked to a pressurized gas inlet via link means (7) enabling the diffuser to be moved, which is mounted in a rigid cylindrical jacket (10), one end (11) of which is open and includes means of linking in a leaktight manner to a full-bore valve orifice (9), while the other end (13) of the jacket is passed through in a leaktight sliding manner by a pipe (7) for feeding gas to the diffuser, and comprising opening means (9a) of said valve and **in that** said diffuser (8) has outlet pores for the gas with the mean diameter of less than 50 $\mu$m to produce gas bubbles with a reduced diameter.

7. The device as claimed in claim 6, **characterized in that** the means of linking the diffuser (8) with the gas inlet consist of a flexible pipe (7).

8. The device as claimed in one of claims 6 to 7, **characterized in that** it comprises a gas detection system (E) comprising a portable pump (20), the intake orifice of which is linked to a suction cup (16) designed to be placed on the ground, the discharge of the pump (20) being linked to a portable gas detector (26).

9. The device as claimed in claim 8, **characterized in that** the gas detection system (E) comprises a portable digital device (28) designed to record the results supplied by the detector (26).

10. The device as claimed in claim 9, **characterized in that** a GPS unit (29) is provided to make it possible to locate the inspected points, and supply this information to the digital device (28).

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3824172
- FR 2729468

- GB 2338072 A